Europäisches Patentamt

European Patent Office

Office européen des brevets

(19)

(11) **EP 0 707 719 B1**

(12) **EUROPÄISCHE PATENTSCHRIFT**

(45) Veröffentlichungstag und Bekanntmachung des Hinweises auf die Patenterteilung:
**14.03.2001  Patentblatt 2001/11**

(21) Anmeldenummer: **94919556.4**

(22) Anmeldetag: **01.07.1994**

(51) Int Cl.[7]: **G05B 13/04**

(86) Internationale Anmeldenummer:
**PCT/DE94/00762**

(87) Internationale Veröffentlichungsnummer:
**WO 95/02213 (19.01.1995 Gazette 1995/04)**

(54) **VERFAHREN ZUR BESTIMMUNG OPTIMALER WERTE FÜR STELLGRÖSSEN EINES TECHNISCHEN SYSTEMS**

PROCESS FOR DETERMINING THE OPTIMUM VALUES OF THE CORRECTING VARIABLES OF A TECHNICAL SYSTEM

PROCEDE DE DETERMINATION DES VALEURS OPTIMALES DES VARIABLES REGLANTES D'UN SYSTEME TECHNIQUE

(84) Benannte Vertragsstaaten:
**BE CH DE ES FR GB IT LI SE**

(30) Priorität: **05.07.1993  DE 4322365**

(43) Veröffentlichungstag der Anmeldung:
**24.04.1996  Patentblatt 1996/17**

(73) Patentinhaber: **SIEMENS AKTIENGESELLSCHAFT**
**80333 München (DE)**

(72) Erfinder:
  • **TRESP, Volker**
    **D-80539 München (DE)**
  • **SCHÜRMANN, Bernd**
    **D-85778 Haimhausen (DE)**
  • **SCHLANG, Martin**
    **D-81735 München (DE)**

(56) Entgegenhaltungen:
**EP-A- 0 176 794**          **EP-A- 0 355 249**
**EP-A- 0 508 202**          **EP-A- 0 531 712**
**EP-A- 0 588 594**          **WO-A-91/10961**
**WO-A-93/12475**          **WO-A-93/12476**
**WO-A-93/25943**          **US-A- 5 016 188**

  • **PROCEEDINGS OF THE 1992 IEEE INTERNATIONAL SYMPOSIUM ON INTELLIGENT CONTROL, August 1992, GLASGOW GB Seiten 531 - 536 M. BROWN AND C.J. HARRIS 'least mean square learning in associative memory networks'**
  • **ADVANCES IN INSTRUMENTATION, Bd.41, Nr.2, 1986, RESEARCH TRIANGLE PARK US Seiten 639 - 651 J.D. LANE 'A modular self-tuning control system'**

**Beschreibung**

Die Erfindung betrifft ein Verfahren zur Bestimmung optimaler Werte für Stellgrößen eines technischen Systems ($\Phi$). Ein solches technisches System kann dabei ganz beliebiger, z.B. elektrischer, mechanischer oder chemischer Natur u.v.a. mehr sein. Ein Beispiel für ein solches System ($\Phi$) ist ein Verbrennungsmotor für Kraftfahrzeuge, z. B. ein Benzinmotor, der im Hinblick auf einige seiner Systemeigenschaften $y_1,...,y_N$ wie z.B. den NOX- (Stickoxid-) Ausstoß, die CO- (Kohlenmonoxid-) Emission, den Kraftstoffverbrauch oder die Motorleistung, etc. optimiert werden soll. Dabei können diese Größen $y_1,...,y_N$ in einer globalen, insgesamt zu optimierenden, möglicherweise nichtlinearen Zielfunktion $z = g(y_1,...,y_N)$ verschieden stark gewichtet werden.

Die Systemeigenschaften $y_1,...,y_N$ hängen gewöhnlich von den Betriebsbedingungen des Systems ab. Diese werden durch Betriebsgrößen $b_1,...,b_B$ (beim Benzinmotor z.B. Drehzahl, Drehmoment, etc.) und durch Stellgrößen $s_1,...,s_S$ (beim Benzinmotor z.B. Zündwinkel, Einspritzzeitpunkt, etc.) charakterisiert. Die Betriebsgrößen sind dabei durch Wünsche eines Anwenders oder andere Umstande vorgegeben. Beim Benzinmotor gibt z.B. der Fahrer mit Hilfe des Gaspedals eine Drehzahl vor, um bei einer gewählten Übersetzung mit einer bestimmten Geschwindigkeit zu fahren. Die Stellgrößen $s_1,...,s_S$ müssen nun so eingestellt (d.h. der Motor in diesem Beispiel so gesteuert) werden, daß sich die gewünschten bzw. vorgegebenen Betriebsgrößen auch tatsächlich einstellen.

Dieses Problem hat i.A. keine eindeutige Lösung. Wie allgemein bekannt, gibt es sportliche und sparsame Kraftfahrer. Je nach Einstellung der Stellgrößen $s_1,...,s_S$ ergeben sich deshalb bei gleichen Betriebsgrößen $b_1,...,b_B$ unterschiedliche Werte für die Systemeigenschaften $y_1,...,y_N$ (z.B. Kraftstoffverbrauch, Schadstoffemission, etc.) und damit unterschiedliche Werte für die Zielfunktion $z = g(y_1,...,y_N)$. Es ist deshalb wünschenswert, die Stellgrößen so einzustellen, daß die vorgegebene Zielfunktion optimiert wird.

Bei den wenigsten gewerblich interessierenden technischen Systemen sind die Zusammenhänge $y_i = \Phi_i(s_1,...,s_S,b_1,...,b_B)$ zwischen Stell- und Betriebsgrößen einerseits und den Systemeigenschaften andererseits in geschlossener Form quantitativ bekannt. Aus diesem Grunde ist man bei der Optimierung im allgemeinen auf Experimente mit dem technischen System selbst angewiesen. Solche Experimente sind häufig zu teuer oder verbieten sich aus Sicherheitsgründen.

Zur Abbildung des Systemverhaltens eines technischen Systems werden neuronale Netze verwendet.

Aus [1] ist bekannt, für die Einstellung von Stellgrößen eines technischen Systems ein neuronales Netz zu verwenden. Unter Verwendung des neuronalen Netzes werden die Stellgrößen mittels einer Vorwärtseinstellung bestimmt.

Aus [2] ist bekannt, Steuerparameter eines Systems unter Verwendung eines neuronalen Netzes, welches das Verhalten des Systems erlernt, einzustellen.

Aus [3] ist bekannt, unter Verwendung eines neuronalen Netzes Eingangsvariable eines linear quadratischen zeitdiskreten Prozesses zu bestimmen.

Der Erfindung liegt die Aufgabe zugrunde ein Verfahren zur Bestimmung optimaler Werte für Stellgrößen eines technischen Systems in dem genannten Zusammenhang anzugeben, welches durchgeführt werden kann, ohne mit dem technischen System zu experimentieren und ohne daß ein Systemmodell in geschlossener Form vorliegen müßte.

Diese Aufgabe wird erfindungsgemäß durch ein Verfahren zur Bestimmung optimaler Werte für Stellgrößen eines technischen Systems mit Merkmalen nach Anspruch 1 gelöst. Bei diesem Verfahren wird ein Satz von Funktionen $f_i(w_1,...,w_W,x_1,...x_{S+B})$ verwendet, deren Parameter $w_1,...,w_W$ so eingestellt sind, daß die Funktionen $f_i$ das System modellieren in dem Sinne, daß die $f_i$ als Funktionen ihrer Variablen $x_1,...,x_{S+B}$ die Systemfunktionen $\Phi_i$ im Sinne eines vorgegebenen Abstandsmaßes approximieren, und die Stellgrößen $s_1,...,s_S$ werden durch Optimierung der Funktion $g(f_1(w_1,...w_W,s_1,...,s_S,b_1,...,b_B),...,f_N(w_1,...w_W,s_1,...,s_S,b_1,...,b_B))$ bei festgehaltenen Werten von $w_1,...,w_W$ und $b_1,...,b_B$ bestimmt. Das technische System wird also für die Zwecke der Optimierung durch ein parametrisches Funktionenmodell repräsentiert, dessen Parameter so adaptiert wurden, daß das Funktionenmodell das technische System mit hinreichender Genauigkeit approximiert. Hierdurch werden die Messungen der Systemeigenschaften, die zur Adaption der Parameter notwendig sind, vom eigentlichen Optimierungsprozeß getrennt. Die Messungen können daher unter besonders günstigen Bedingungen durchgeführt werden, die - im Gegensatz zu Messungen bei experimentellen Optimierungen - von den Erfordernissen des Optimierungsverfahrens nicht mehr beeinflußt werden.

Dieses Verfahren hat außerdem den Vorteil, daß

- die Zielfunktion verändert werden kann, ohne daß die Parameter $w_1,...,w_W$ des Satzes von Funktionen $f_i(w_1,...,w_W,x_1,...,x_{S+B})$ neu eingestellt werden müßten,
- das System durch Einstellung verschiedener Betriebsgrößen ohne zusätzlichen Aufwand in verschiedenen Arbeitspunkten optimiert werden kann,
- ein vorhandenes Systemmodell (Funktionensatz) als Ausgangspunkt zur Modellierung weiterer Systeme und damit zur Beschleunigung der Modellierung weiterer Systeme verwendet werden kann.

Vorteilhafte Weiterbildungen der Erfindung ergeben sich aus den Unteransprüchen.

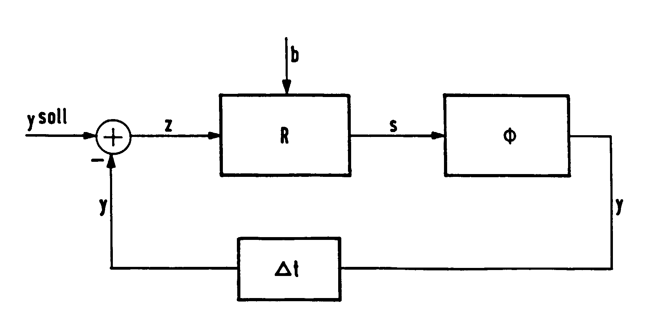

Figur 1 zeigt ein Regelsystem mit geschlossener Regelschleife zur Regelung eines technischen Systems, wobei der Regler die Stellgrößen unter Verwendung des erfindungsgemäßen Verfahren ermittelt.

Im folgenden wird die Erfindung anhand bevorzugter Ausführungsbeispiele und mit Hilfe der Figuren näher beschrieben.

Dazu wird ein technisches System ($\Phi$) betrachtet, z.B. ein Benzinmotor, der mit vorgegebenen Betriebsgrößen $b_1,...,b_B$ betrieben werden soll. Das System kann durch geeignete Wahl der Werte einer Anzahl von Stellgrößen dazu gebracht werden, in den Betriebszustand $b_1,...,b_B$ überzugehen. In diesem Betriebszustand hat das System die Eigenschaften $y_1,...,y_N$ mit $y_i = \Phi_i(s_1,...,s_S,b_1,...,b_B)$. Die Eigenschaften des Systems sind also in einem gegebenen Betriebszustand noch von den Werten der Stellgrößen abhängig.

Bei den meisten technischen Systemen ist die Wahl der Stellgrößen bei vorgegebenen Betriebsgrößen nicht eindeutig; vielmehr kann man die Stellgrößen auf sehr unterschiedliche Weisen Einstellen und es ergibt sich dennoch der vorgegebene Betriebszustand. Man wird die Stellgrößen daher im allgemeinen so wählen wollen, daß die Systemeigenschaften in dem Sinne optimal werden, daß eine vorgegebene Zielfunktion $z = g(y_1,...,y_N)$ optimiert wird.

Die Erfindung löst diese Aufgabe mit Hilfe eines geeigneten Satzes von Funktionen $f_i(w_1,...,w_W,x_1,...,x_{S+B})$, der das System bzw. die Systemfunktionen $y_i = \Phi_i(s_1,...,s_S,b_1,...,b_B)$ im Sinne eines vorgegebenen Abstandsmaßes approximiert. Solche Funktionensysteme, die von Parametern $w_1,...,w_W$ abhängen, und mit denen man das Verhalten eines beliebigen technischen Systems innerhalb jeder vorgegebenen Genauigkeit modellieren kann, sind dem Fachmann in großer Zahl bekannt. Beispiele hierfür sind orthogonale Funktionensysteme, Interpolationspolynome, Spline-Funktionen, etc. In den Standardwerken über numerische Mathematik für Ingenieure oder Approximationstheorie findet der Fachmann eine große Zahl von numerischen Techniken zur Bestimmung der Parameter $w_1,...,w_W$, für die ein gewähltes Funktionensystem ein gegebenes technisches System hinreichend genau approximiert, also modelliert.

Auch sogenannte künstliche neuronale Netze sind letztlich parametrische Funktionensysteme, bei denen die Parameter häufig als (Synapsen-)Gewichte oder Gewichtskoeffizienten bezeichnet werden. Neuronale Netze sind wegen der Nichtlinearität ihrer Abhängigkeit von den Gewichten (Parameter $w_1,...,w_W$) und der besonders effizienten Lernverfahren, mit denen diese Gewichte eingestellt werden können, besonders zur Modellierung nahezu beliebiger technischer Systeme geeignet. Ferner können sie auf einfache Weise durch spezielle Schaltungsanordnungen repräsentiert werden. Solche speziellen Schaltungsanordnungen können mit einem Datenverarbeitungssystem zur Durchführung der Erfindung zusammenarbeiten. Die erwähnten Eigenschaften neuronaler Netze sind dem Fachmann aus der umfangreichen Literatur über künstliche neuronale Netze bekannt.

Nachdem die Parameter eines solchen Funktionensystems so eingestellt worden sind, daß dieses Funktionensystem das betrachtete technische System modelliert, d.h. hinreichend genau approximiert, kann das Funktionensystem bei einer speziellen Ausführungsform der Erfindung zur Erzeugung einer Tabelle von Zahlenwerten verwendet werden, welche die Werte aller Funktionen des Systems für hinreichend viele Werte ihrer Variablen $x_1,...,x_{S+B}$ als Einträge enthält. Für die Zwecke der Erfindung repräsentiert dann diese Tabelle das Funktionensystem. Sie hat den Vorteil, daß sie z.B. in einer Speichereinheit eines Datenverarbeitungssystems gespeichert werden kann. Hierdurch wird dann keine Prozessorleistung und auch keine spezielle Schaltungstechnik zur Berechnung von Funktionswerten mehr benötigt.

Ein Funktionensystem der oben erwähnten Art kann aber auch durch spezielle Softwareroutinen repräsentiert werden, die zur Durchführung der Erfindung von einem Datenverarbeitungssystem ausgeführt werden können.

Welches Funktionensystem der Fachmann zur Modellierung eines gegebenen technischen Systems wählen wird, und wie er dieses Funktionensystem für eine bestimmte Anwendung repräsentieren wird - als Tabelle, als spezielle Schaltung, als Softwareroutine, etc. - hängt von den speziellen Gegebenheiten des Anwendungsfalles ab.

Ein derartiges Modell eines technischen System in Gestalt eines parametrischen Satzes von Funktionen wird nun gemäß der Erfindung dazu verwendet, dieses technische System für die Optimierung der Zielfunktion $z = g(y_1,...,y_N)$ in dem Sinne zu ersetzen, daß die Stellgrößen $s_1,...,s_S$ durch Optimierung der Funktion $g(f_1(w_1,...,w_W,s_1,...,s_S,b_1,...,b_B),...,f_N(w_1,...w_W,s_1,...,s_S,b_1,...,b_B))$ bei festgehaltenen Werten von $w_1,...,w_W$ und $b_1,...,b_B$ bestimmt werden. Durch diese Ersetzung wird die Funktion $z = g(y_1,...,y_N)$ der unbekannten Systemeigenschaften $y_1,...,y_N$ eine Funktion der bekannten und festzuhaltenden Parameter $w_1,...,w_W$ und Betriebsgrößen $b_1,...,b_B$ sowie der zu bestimmenden und zu variierenden Stellgrößen $s_1,...,s_S$.

Zur Optimierung dieser Funktion kann jedes geeignete Optimierungsverfahren verwendet werden. Dem Fachmann sind aus der mathematischen Literatur für Ingenieure sehr unterschiedliche Optimierungsverfahren in großer Zahl bekannt. Welches dieser Verfahren im konkreten Anwendungsfall besonders geeignet ist, hängt von den speziellen Gegebenheiten dieses Anwendungsfalles ab.

Ein mögliches Optimierungsverfahren ist der sogenannte Gradientenabstieg. Dieses Verfahren bietet sich an, wenn das gesuchte Optimum der zu optimierenden Zielfunktion ein lokales Optimum (lokales Minimum oder Maximum) ist, und wenn die Zielfunktion hinreichend glatt ist. Hierbei werden - ausgehend von anfänglichen Schätzwerten $s_i^0$ der Stellgrößen $s_1,...,s_S$, die im Einzugsbereich des gesuchten Optimums liegen müssen, - die Stellgrößen schritt-

weise nach dem Schema

$$s_i^{k+1} = s_i^k - \eta \cdot \left( \frac{\partial g}{\partial s_i} \right)_{w,b} = s_i^k - \eta \cdot \sum_j \frac{\partial g}{\partial f_j} \left( \frac{\partial f_j}{\partial s_i} \right)_{w,b}$$

verändert. Hierbei ist $\eta$ ein Vorfaktor, dessen Werte in Abhängigkeit von den speziellen Gegebenheiten des Anwendungsfalles zu wählen sind. Die mathematische Literatur für Ingenieure gibt dem Fachmann umfassend Aufschluß darüber, wie er die Werte für $\eta$ zu wählen hat, damit das Optimierungsverfahren zum Erfolg führt. Die Erfindung kann aber auch in Verbindung mit anderen, z.B. stochastischen Optimierungsverfahren (Simulated Annealing, Random Walk, etc.) erfolgreich ausgeführt werden. Es gibt zu diesem Thema eine große Zahl einschlägiger, für den Techniker und Ingenieur geschriebener Lehrbücher und Fachveröffentlichungen, mit deren Hilfe der Fachmann ein für seinen Anwendungsfall geeignetes Optimierungsverfahren unschwer auswählen und Ausführen kann.

Ist für ein gegebenes technisches System $\Phi$ ein parametrisches Funktionenmodell vorhanden, dann kann daraus häufig ein weiteres Funktionenmodell für ein ähnliches System $\Psi$ erstellt werden, indem - ausgehend von den Parameterwerten des vorhandenen Modells - diese Parameter so abgeändert werden, daß schließlich das System $\Psi$ modelliert wird. Hierdurch kann der Aufwand zur Bereitstellung parametrischer Funktionenmodelle weitgehend reduziert werden.

Das erfindungsgemäße Verfahren kann mit Vorteil dazu verwendet werden, die Stellgrößen eines technischen Systems in einer geschlossenen Regelschleife so einzustellen, daß der Regelfehler der geschlossenen Regelschleife minimiert wird. Figur 1 zeigt eine schematische Darstellung dieser Anwendung. Bei dieser Ausführungsform der Erfindung wird das zu regelnde System $\Phi$ mit Hilfe des parametrischen Funktionensystems innerhalb der Regelschleife modelliert. Bei derartigen Anwendungen wird es im allgemeinen vorteilhaft sein, dieses parametrische Funktionenmodell mit Hilfe einer gespeicherten Zahlentabelle (z.B. im ROM, EEPROM, etc. eines elektronischen Regelsystems) oder mit Hilfe einer speziellen Schaltungsanordnung (z.B. ASIC) zu repräsentieren. Auf diese Weise kann man ein Regelsystem zur Regelung eines technischen Systems ($\Phi$) mit folgenden Merkmalen aufbauen:

a) der Regler ermittelt anhand vorgegebener Werte für Betriebsgrößen $b_1,...,b_B$ des zu regelnden Systems ($\Phi$) durch Minimierung eines Regelfehlers z nach Anspruch 7 Stellgrößen für das zu regelnde System;
b) das zu regelnde System ($\Phi$) liefert Meßwerte für Systemeigenschaften $y_1,...,y_N$ mit $y_i = \Phi_i(s_1,...,s_S,b_1,...,b_B)$, die ihrerseits zur Bestimmung des Regelfehlers $z = g(y_1,...,y_N)$ verwendet werden.

Bei einer bevorzugten Ausführungsform dieses erfindungsgemäßen Regelsystems wird der Regelfehler aus den Systemeigenschaften $y_1,...,y_N$ und aus Sollwerten $y_1^{Soll},...,y_N^{Soll}$ für diese Systemeigenschaften ermittelt. Dabei ist es im allgemeinen besonders vorteilhaft, wenn der Regelfehler aus den Systemeigenschaften $y_1,...,y_N$ und aus Sollwerten $y_1^{Soll},...,y_N^{Soll}$ für diese Systemeigenschaften in der Form $z = g(y_1 - y_1^{Soll},...,y_N - y_N^{Soll})$ ermittelt wird.

Im Rahmen dieses Dokuments wurden folgende Veröffentlichungen zitiert:

[1] WO 93/25943

[2] WO 93/12475

[3] US 5 016 188

**Patentansprüche**

1. Verfahren zur Bestimmung optimaler Werte für erste Stellgrößen $s_1,...,s_S$ eines technischen Systems ($\Phi$) bei vorgegebenen ersten Betriebsgrößen $b_1,...,b_B$ mit dem Ziel, eine vorgegebene Zielfunktion $z = g(y_1,...,y_N)$ von Systemeigenschaften $y_1,...,y_N$ mit $y_i = \Phi_i(s_1,...,s_S,b_1,...,b_B)$ zu optimieren, bei dem

a) in einem ersten Schritt am technischen System ($\Phi$) Abhängigkeiten zwischen ersten Stellgrößen (s), ersten Betriebsgrößen $b_1,...,b_B$ und ersten Systemeigenschaften (y) durch Messung der ersten Systemeigenschaften (y) bei vorgebenden ersten Stellgrößen (s) und ersten Betriebsgrößen $b_1,...,b_B$ bestimmt werden,

b) in einem zweiten Schritt mit diesen Abhängigkeiten ein Satz von Funktionen $f_i(w_1,...,w_W,x_1,...,x_{S+B})$ erzeugt wird, deren erste Parameter $w_1,...,w_W$ dazu so eingestellt werden, daß die Funktionen $f_i$ das System modellieren in dem Sinne, daß die $f_i$ als Funktionen ihrer Variablen $x_1,...,x_{S+B}$ die Systemfunktionen $\Phi_i$ im Sinne eines vorgegebenen Abstandsmaßes approximieren, und

    c) in einem dritten Schritt die Stellgrößen $s_1,...,s_S$ durch Optimierung der ersten Optimierungsfunktion $g(f_1(w_1,...w_W,s_1,...,s_S,b_1,...,b_B),...,f_N(w_1,...w_W,s_1,...,s_S,b_1,...,b_B))$ bei festgehaltenen Werten von $w_1,...,w_W$ und ersten Betriebsgrößen $b_1,...,b_B$ bestimmt werden.

**2.** Verfahren nach Anspruch 1, bei dem in einem weiteren Schritt die Stellgrößen $s_1,...,s_S$ durch Optimierung der ersten Optimierungsfunktion für zweite Betriebsgrößen $b_1,...,b_B$ bestimmt werden.

**3.** Verfahren nach Anspruch 2, bei dem alle Verfahrenschritte für zweite Betriebsgrößen $b_1,...,b_B$ durchgeführt werden werden, wodurch ein Satz von Funktionen $f_i(w_1,...,w_W,x_1,...,x_{S+B})$ mit zweiten Parametern $w_1,...,w_W$ erzeugt wird.

**4.** Verfahren nach einem der vorangehenden Ansprüche, bei dem der Satz von Funktionen $f_i(w_1,...,w_W,x_1,...,x_{S+B})$ durch ein künstliches neuronales Netz repräsentiert wird.

**5.** Verfahren nach einem der Ansprüche 1 bis 3, bei dem der Satz von Funktionen $f_i(w_1,...,w_W,x_1,...,x_{S+B})$ durch eine Tabelle von Zahlenwerten repräsentiert wird, die in einer Speichereinheit eines Datenverarbeitungssystems gespeichert ist.

**6.** Verfahren nach einem der vorhergehenden Ansprüche, bei dem der Satz von Funktionen $f_i(w_1,...,w_W,x_1,...,x_{S+B})$ durch eine elektronische Schaltungsanordnung repräsentiert wird, die Bestandteil eines elektronischen Datenverarbeitungssystems ist, welches das Verfahren durchführt, oder die mit einem solchen elektronischen Datenverarbeitungssystem zusammenarbeitet.

**7.** Verfahren nach einem der vorhergehenden Ansprüche zur Regelung eines technischen Systems, wobei die Zielfunktion z der Regelfehler eines Reglers ist und wobei die Stellgrößen des Reglers mit Hilfe dieses Verfahrens ermittelt werden.

**Claims**

**1.** Method for determining optimum values for first manipulated variables $s_1,..., s_S$ of a technical system ($\phi$) in the case of prescribed first performance quantities $b_1,...,b_B$, with the aim of optimizing a prescribed target function $z = g(y_1,...y_N)$ of system properties $y_1,...,y_N$, where $y_i = \phi_i(s_1,...,s_S,b_1,...,b_B)$, in the case of which

    a) in a first step dependencies between first manipulated variables (s), first performance quantities $b_1,...,b_B$ and first system properties (y) are determined on the technical system ($\phi$) by measuring the first system properties (y) for specific first manipulated variables (s) and first performance quantities $b_1,...,b_B$,
    b) in a second step these dependencies are used to produce a set of functions $f_i(w_1,...,w_W,x_1,...,x_{S+B})$ whose first parameters $w_1,...,w_W$ are set for this purpose such that the functions $f_i$ model the system to the effect that the $f_i$ as functions of their variables $x_1,...,x_{S+B}$ approximate the system functions $\phi_i$ for the purpose of a prescribed clearance, and
    c) in a third step the manipulated variables $s_1,...,s_S$ are determined by optimizing the first optimization function $g(f_1(w_1,...w_W,s_1,...,s_S,b_1,...,b_B),...,f_N(w_1,...w_W,s_1,...,s_S, b_1,...,b_B))$ in conjunction with fixed values of $w_1,...,w_W$ and first performance quantities $b_1,...,b_B$.

**2.** Method according to Claim 1, in which in a further step the manipulated variables $s_1,...,s_S$ are determined by optimizing the first optimization function for second performance quantities $b_1,...,b_B$.

**3.** Method according to Claim 2, in which all the method steps are carried out for second performance quantities $b_1,...,b_B$, as a result of which a set of functions $f_i(w_1,...,w_W,x_1,...,x_{S+B})$ with second parameters $w_1,...,w_W$ is produced.

**4.** Method according to one of the preceding claims, in which the set of functions $f_i(w_1,...,w_W,x_1,...,x_{S+B})$ is represented by an artificial neural network.

**5.** Method according to one of Claims 1 to 3, in which the set of functions $f_i(w_1,...,w_w,x_1,...,x_{S+B})$ is represented by a table of numerical values which is stored in a memory unit of a data processing system.

**6.** Method according to one of the preceding claims, in which the set of functions $f_i(w_1,...,w_W,x_1,...,x_{S+B})$ is represented by an electronic circuit arrangement which is a constituent of an electronic data processing system which carries out the method, or which cooperates with such an electronic data processing system.

**7.** Method according to one of the preceding claims for controlling a technical system, the target function z being the control error of a controller, and the manipulated variables of the controller being determined with the aid of this method.

**Revendications**

**1.** Procédé de détermination de valeurs optimales pour des premières variables réglantes $s_1,...,s_S$ d'un système technique (Φ) à des premières grandeurs de régime prédéfinies $b_1,...,b_B$ avec l'objectif d'optimiser une fonction objectif prédéfinie $z = g (y_1,... y_N)$ de propriétés du système $y_1,...,y_N$ avec $y_i = \Phi(s_1, ..., s_S, b_1, ..., b_B)$, dans lequel

a) dans une première étape du système technique (Φ), des dépendances entre des premières variables réglantes (s), des premières grandeurs de régime $b_1, ..., b_B$ et des premières propriétés du système (y) sont déterminées en mesurant les premières propriétés du système (y) à des premières variables réglantes (s) et des premières grandeurs de régime $b_1, ..., b_B$ allouées,
b) dans une deuxième étape avec ces dépendances, un groupe de fonctions $f_i(w_1, ..., w_W, x_1, ..., x_{S+B})$ est créé, dont les premiers paramètres $w_1,...,w_W$ sont réglés de manière à ce que les fonctions $f_i$ modèlent le système au sens où les $f_i$ en tant que fonctions de leurs variables $x_1,...,x_{S+B}$ s'approchent par approximation des fonctions du système $\Phi_i$ au sens d'une mesure d'écart prédéfinie, et
c) dans une troisième étape, les variables réglantes $s_1,...,s_S$ sont déterminées par optimisation de la première fonction d'optimisation $g(f_1(w_1,...w_W,s_1,...,s_S,b_1,...,b_B),...,f_N(w_1,...w_W,s_1,...,s_S,b_1,...,b_B))$ à des valeurs maintenues de $w_1,...,w_W$ et des premières grandeurs de régime $b_1,...,b_B$.

**2.** Procédé selon la revendication 1, dans lequel dans une autre étape, les variables réglantes $s_1,...,s_S$ sont déterminées par optimisation de la première fonction d'optimisation pour des deuxièmes grandeurs de régime $b_1,...,b_B$.

**3.** Procédé selon la revendication 2, dans lequel toutes les étapes du procédé pour des deuxièmes grandeurs de régime $b_1,...,b_B$ seront exécutées, par ce moyen un groupe de fonctions $f_i(w_1, ..., w_W,x_1, ..., x_{S+B})$ avec des deuxièmes paramètres $w_1,...,w_W$ est créé.

**4.** Procédé selon l'une des revendications précédentes, dans lequel le groupe de fonctions $f_i(w_1, ..., w_W,x_1, ..., x_{S+B})$ est représenté par un réseau neuronal artificiel.

**5.** Procédé selon l'une des revendications 1 à 3, dans lequel le groupe de fonctions $f_i(w_1, ..., w_W,x_1, ..., x_{S+B})$ est représenté par un tableau de valeurs numériques qui est enregistré dans une unité d'enregistrement d'un ensemble de traitement d'information.

**6.** Procédé selon l'une des revendications précédentes, dans lequel le groupe de fonctions $f_i(w_1, ..., w_W, x_1, ..., x_{S+B})$ est représenté par un circuit électronique qui est un composant d'un ensemble électronique de traitement de l'information, lequel exécute le procédé, ou coopère avec un tel ensemble électronique de traitement d'information.

**7.** Procédé selon l'une des revendications précédentes destiné au réglage d'un système technique, dans lequel la fonction objectif z est l'erreur de réglage d'un mécanisme de réglage et dans lequel les variables réglantes du mécanisme de réglage sont détectées à l'aide de ce procédé.